# EUROPÄISCHE PATENTSCHRIFT

(11) **EP 0 833 540 B1**
(45) Veröffentlichungstag und Bekanntmachung des Hinweises auf die Patenterteilung: **12.06.2002**
(21) Anmeldenummer: 97115751.6
(22) Anmeldetag: 10.09.1997
(51) Int. Cl.: H04Q 7/38, H04Q 7/22

(54) **Verfahren und Kommunikationsnetz zur Übertragung von Informationen zwischen Netzeinrichtungen**
Method and communication network for transmitting information between network equipments
Procédé et réseau de communication pour la transmission d'informations entre des équipements du réseau

(30) Priorität: 30.09.1996 DE 19640310
(43) Veröffentlichungstag der Anmeldung: 01.04.1998
(73) Patentinhaber: SIEMENS AKTIENGESELLSCHAFT, 80333 München (DE)
(72) Erfinder: Dettner, Harald, 35274 Kirchhain (DE)

(56) Entgegenhaltungen:
- EP-A- 0 713 307
- WO-A-96/25014
- DE-C- 19 515 558
- DE-C- 19 604 049
- US-A- 4 953 210

## Beschreibung

Die Erfindung betrifft ein Verfahren zur Übertragung von Informationen zwischen Netzeinrichtungen eines oder mehrerer Kommunikationsnetze und ein entsprechendes Kommunikationsnetz.

Es ist bekannt, zwischen Netzeinrichtungen eines oder mehrerer Kommunikationsnetze Transaktionen abzuwickeln, die die Übertragung von Informationen, beispielsweise gemäß standardisierten Signalisierungsprotokollen, betreffen. Beispielsweise wird in dem länderübergreifenden zellular aufgebauten Mobilfunknetz nach dem GSM-Standard (Global System for Mobile Communication), das in den einzelnen Ländern von entsprechenden Mobilfunknetzen mit zugehörigen Netzbetreibern getragen wird, ein zentrales Zeichengabesystem Nr. 7 (CCS7) als Signalisierungsprotokoll verwendet, das in mehrere Bestandteile aufgeteilt ist. Neben einem Benutzerteil für Fernsprechen an der Schnittstelle zu einem ISDN-Netz oder einem öffentlichen Fernsprechnetz umfaßt das zentrale Zeichengabesystem Anwenderteile (Application Parts). So steuert beispielsweise der mobilfunkspezifische Anwenderteil (Mobile Application Part) die interne Kommunikation zwischen den Netzeinrichtungen des oder der Mobilfunknetze. Der Anwenderteil stellt eine oder mehrere Zeichengabeprozeduren zur Verfügung, die abgeschlossene Steuerfunktionen übernehmen.

Aus der GSM-Spezifikation 09.02, Final Draft, Nov. 1994, Seiten 38 bis 40 ist ein Verfahren zur Vereinbarung der Anwenderversion bekannt, die auf einer Versuch- und Irrtums-Methode basiert, bei der in eine erste Tabelle die am höchsten unterstützte Anwenderversion für die vom Dialog betroffene Netzeinrichtung und eine Datumsangabe, die den Zeitpunkt der Unterstützung einer höheren Anwenderversion durch die jeweilige Netzeinrichtung angibt, eingetragen werden. Sobald die Datumsangabe erreicht ist, wird die aktuell unterstützte Anwenderversion als unbekannt gekennzeichnet und zu einer zweiten Tabelle verzweigt. Das bekannte Verfahren setzt voraus, daß der Zeitpunkt für die Umstellung der von den Netzeinrichtungen unterstützten höheren Anwenderversion bekannt ist. Die Einträge in der ersten Tabelle werden einmalig durch eine Steuerfunktion gesetzt und verbleiben anschließend in einem statischen Zustand.

Für den Aufbau eines Dialogs zwischen jeweils zwei Netzeinrichtungen des Mobilfunknetzes wird gemäß einer älteren Patentanmeldung der Anmelderin DE 196 04 049 C1, veröffentlicht am 10.04.1997, im Zuge der gegenseitigen Übertragung von Informationen über unterstützte Leistungsmerkmale und/oder Eigenschaften der Netzeinrichtungen eine gesonderte Nachricht (ENCI, Exchange of Network Capabilities Information) übertragen. Diese Nachricht dient dazu, abzufragen, ob die von einer Netzeinrichtung unterstützten Funktionen auch in der Partner-Netzeinrichtung für nächstfolgenden Dialoge verfügbar sind. Ist dies der Fall, erfolgt ein Eintrag in eine Tabelle. Die Einträge haben die Aufgabe, sicherzustellen, daß eine Informationsübertragung nur bei Unterstützung der Funktion(en) durch die Partner-Netzeinrichtung ausgeführt wird. Neben der Notwendigkeit einer gesonderten Nachricht (ENCI) besteht bei dem Verfahren der Nachteil, daß nach Bestätigung der Unterstützung einer Funktion durch die Partner-Netzeinrichtung Fehler in der Netzeinrichtung auftreten können, die zu einer Abschaltung von Teilfunktionen oder der gesamten Funktion führen, eine Korrektur der Tabelle in der abfragenden Netzeinrichtung aber nicht vorgesehen ist. Sie kann somit falsche Informationen enthalten. Bei Fehlern ist eine Signalisierung mittels der gesonderten Nachricht (ENCI) nicht mehr möglich. Eine Fehlerbehandlung ist bei der gesonderten Nachricht (ENCI) nicht vorgesehen.

Die US-4,953,210 offenbart, bei einem handshake zweier synchroner Modems Informationen über das jeweils andere Modem auf einer trial-and-error-Basis zu ermitteln. Die DE 19515558C1 offenbart, einem angerufenen Funkteilnehmer netzübergreifend und unabhängig von den individuellen Netzbetreiberspezifischen Diensten ein Dienstespektrum bestehend aus mehreren Diensten einheitlich zur Verfügung zu stellen, wobei eine zentrale Speicherung von ein bestimmtes Dienstespektrum unterstützenden Mobilvermittlungsstellen vorgesehen ist.

Es ist Aufgabe der vorliegenden Erfindung, ein Verfahren der eingangs genannten Art anzugeben, durch das die Netzeinrichtungen über die in anderen Netzeinrichtungen verfügbaren Funktionen auf möglichst einfache Weise unter Berücksichtigung von gegebenfalls auftretenden Fehlern informiert werden können.

Diese Aufgabe wird gemäß der Erfindung durch die Merkmale des Patentanspruchs 1 hinsichtlich des Verfahrens und durch die Merkmale des Patentanspruchs 8 hinsichtlich des Kommunikationsnetzes gelöst. Weiterbildungen der Erfindung sind in den Unteransprüchen angegeben.

Das Prinzip der Erfindung beruht auf der Versuchs-und-Irrtums-Methode, bei der eine Netzeinrichtung einen Dialog zu einer anderen Netzeinrichtung mit einer Nachricht wie gewöhnlich initiert und damit die von ihr unterstützte(n) Funktion(en) mitteilt. Quittiert die andere Netzeinrichtung den aufgebauten Dialog mit einer positiven Nachricht oder mit einer negativen Nachricht in Bezug auf die Unterstützung der Funktion(en), wird ein entsprechender Eintrag in einer Tabelle gebildet. Dies bedeutet, daß sich jede Netzeinrichtung die Tabelle aktiv selbst durch Initiieren von Dialogen aufbauen und entsprechend den Rückmeldungen aktualisieren kann, ohne daß es hierfür jeweils einer gesonderten Nachricht zum Austausch von unterstützten Leistungsmerkmalen und/oder von Eigenschaften der Netzeinrichtungen bedarf. Die Netzeinrichtung merkt sich somit in ihrer Tabelle, welche Dialoge zu jeweils einer anderen Netzeinrichtung positiv und welche Dialoge negativ verlaufen sind. Auf diese einfache Art und Weise können auch Fehler sicher erkannt und in der Tabelle berücksichtigt werden, sodaß unnötige Informationsübertragungen wegen nicht unterstützter Funktionen bereits vorab vermieden werden.

Von Vorteil ist dabei, wenn für nächstfolgende Dialoge von der Netzeinrichtung, die den Dialog jeweils initiieren möchte, die Tabelle zunächst auf das Vorhandensein eines Eintrags für die andere Netzeinrichtung abgefragt und erst bei einem positiven Eintrag der Dialog eröffnet wird. Alternativ dazu ist es vorteilhaft, wenn für nächstfolgende Dialoge von der Netzeinrichtung, die den Dialog jeweils initiieren möchte, die Tabelle zunächst auf das Vorhandensein eines Eintrags für die andere Netzeinrichtung abgefragt und bei einem negativen Eintrag der Dialog entweder nicht eröffnet oder mit Ersatzinformationen in der auszusendenden Nachricht gestartet wird.

Von besonderem Vorteil ist es, wenn in regelmäßigen Abständen eine Überprüfung der Unterstützung der Funktionen durch die Netzeinrichtungen initiiert und die Einträge in der Tabelle abhängig vom Prüfungsergebnis aktualisiert werden.

Gemäß einer vorteilhaften Weiterbildung der Erfindung betreffen die Funktionen neue und/oder bestehende Telekommunikationsdienste, Zusatzdienste und/oder Leistungsmerkmale, die jeweils im Kommunikationsnetz zur Verfügung zu stellen sind. Dabei sind besonders die Prozeduren zur Durchführung der Telekommunikationsdienste, Zusatzdienste und/oder Leistungsmerkmale als verfügbare Funktionen zwischen den Netzeinrichtungen zu vereinbaren.

Die Erfindung wird anhand von in Figuren dargestellten Ausführungsbeispielen, die sich jeweils auf die Informationsübertragung zwischen einem Heimatregister und einem Besucherregister eines Mobilfunknetzes beziehen, näher erläutert. Im einzelnen zeigen
- Figur 1: die Informationsübertragung für optimiertes Routen von Verbindungen,
- Figur 2: die Informationsübertragung für ein Leistungsmerkmals zur Unterstützung eines netzbetreiberspezifischen Dienstes, und
- Figur 3: die Informationsübertragung für einen Gruppenanrufe betreffenden Dienst.

Die Informationen werden in den vorliegenden Beispielen jeweils zwischen zwei Netzeinrichtungen eines digitalen, zellular aufgebauten länderübergreifenden Mobilfunknetzes nach dem GSM-Standard gemäß einem mobilfunkspezifischen Anwenderteil (MAP) des bekannten zentralen Zeichengabesystems CCS7 übertragen. Die Netzeinrichtungen werden von einem Heimatregister HLR und einem Besucherregister VLR gebildet und stehen nur stellvertretend für alle Arten von Netzeinrichtungen des Mobilfunknetzes. Dabei können sich die Netzeinrichtungen auch in verschiedenen Landesnetzen mit unterschiedlichen Netzbetreibern befinden. Die Erfindung ist nicht auf Mobilfunknetze beschränkt, sondern kann auch bei Netzeinrichtungen anderer Kommunikationsnetze, z.B. leitungsgebundener Festnetze, angewendet werden. Das Besucherregister VLR stellt eine dezentrale Teilnehmerdatenbasis dar, in der die Teilnehmerdaten der in einem bestimmten Versorgungsbereich sich aktuell aufhaltenden Mobilfunkteilnehmer vorübergehend für die Dauer des Aufenthalts gespeichert sind. Dabei ist das Besucherregister VLR einer Mobilvermittlungsstelle zugeordnet, die Vermittlungsfunktionen zur Verbindungbehandlung bei ankommenden und abgehenden Anrufen für einen Versorgungsbereich des Mobilfunknetzes übernimmt. Das Heimatregister HLR dient als zentrale Teilnehmerdatenbasis und speichert die Teilnehmerdaten der im Mobilfunknetz registrierten Mobilfunkteilnehmer permanent. Üblicherweise sind mehrere Heimatregister HLR und Besucheregister VLR über den gesamten Versorgungbereich des Mobilfunknetzes verteilt angeordnet.

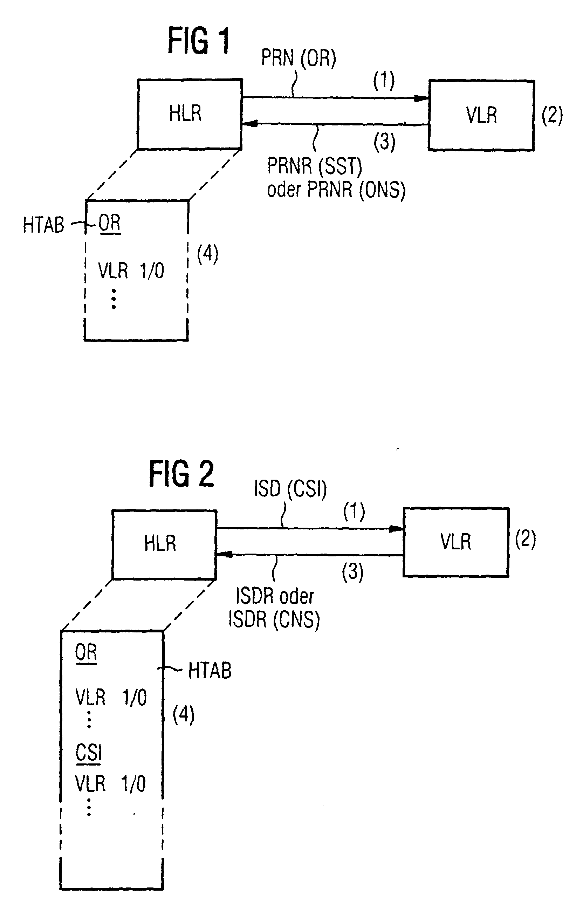

Die Figur 1 zeigt die Informationsübertragung zur Unterstützung eines optimierten Routens (optimal routing) von Verbindungen im GSM-Mobilfunknetz. Dabei wird gemäß der GSM-Empfehlung 03.79, Version 0.9.0 vom 31.07.1996 von einer Zugangs-Mobilvermittlungstelle eines ersten Netzes eine Nachricht zur Aufenthaltsabfrage an das Heimatregister des Heimat-Netzes, in dem ein angerufener Mobilfunkteilnehmer permanent mit seinen Teilnehmerdaten registriert ist, netzübergreifend gesendet. Der Zweck der Aufenthaltsabfrage liegt in einer Bereitstellung von Informationen, anhand der von der Zugangs-Mobilvermittlungsstelle eine direkte Verbindung zu einer Besucher-Mobilvermittlungsstelle eines Besucher-Netzes, in dem der angerufene Mobilfunkteilnehmer sich momentan aufhält, aufgebaut werden kann.

Nach der genannten GSM-Empfehlung 03.79 wird im Zuge des optimierten Routens zumindestens eine Aufenthaltsabfrage durchgeführt, bei der zunächst von der Zugangs-Mobilvermittlungsstelle mit einer an das Heimatregister HLR gerichteten Abfrage (send location info) Informationen über den Aufenthaltsort des angerufenen Mobilfunkteilnehmer, z.B. in Form der Adresse der zuständigen Besucher-Mobilvermittlungsstelle, abgerufen werden. In der Folge wird vom Heimatregister HLR ein Dialog mit dem für den Mobilfunkteilnehmer aktuell zuständigen Besucherregister VLR eröffnet, indem eine Nachricht PRN (provide roaming number) ausgesendet wird. Die Nachricht PRN enthält eine Information OR, mit der dem Besucherregister VLR die von dem Heimatregister HLR unterstützte Funktion, die im vorliegenden Beispiel das optimierte Routen betrifft, mitgeteilt wird (1). Das Besucherregister VLR überprüft daraufhin, ob das optimierte Routen ebenfalls unterstützt wird (2), und sendet ein Prüfungsergebnis in einer Nachricht PRNR (provide roaming number result) zum Heimatregister HLR zurück.

Ein positives Prüfungsergebnis ist erkennbar am Empfang einer oder mehrerer Informationen SST, die den Teilnehmerstatus des angerufenen Mobilfunkteilnehmers signalisieren. Der Teilnehmerstatus gibt beispielsweise an, ob der Mobilfunkteilnehmer über seine Funkteilnehmerstation erreichbar ist und sich nicht in einem abgeschalteten Zustand oder in einem von der Funkversorgung abgeschnittenen Zustand befindet. Es ist auch möglich, daß in der Nachricht PRNR bereits eine temporäre Aufenthaltsrufnummer (Mobile Subscriber Roaming Number) mitgesendet wird, die zum Verbindungsaufbau vorübergehend benötigt wird. Ein negatives Prüfungsergebnis ist erkennbar am Empfang einer Information ONS (optimal routing not supported), mit der von dem Besucherregister VLR die Nichtunterstützung des optimierten Routens signalisiert wird (3). Das Heimatregister HLR baut selbsttätig eine Tabelle HTAB auf, in der als Folge der einzelnen Dialoge mit anderen Netzeinrichtungen, wie z.B. dem Besucherregister VLR, Einträge zur Kennzeichnung der Unterstützung bzw. der Nichtunterstützung der von ihr unterstützten Funktionen gespeichert sind. So wird für den Fall eines negativen Prüfungsergebnisses eine binäre 0 als negativer Eintrag zur Kennzeichnung der Nichtunterstützung der Funktionen durch das Besucherregister VLR und eine binäre 1 als positiver Eintrag zur Kennzeichnung der Unterstützung der Funktionen durch das Besucherregister VLR in die Tabelle HTAB vom Heimatregister HLR eingetragen (4). Die in die Tabelle HTAB eingetragenen Informationen werden für zukünftige Dialoge benutzt, um bei Nichtunterstützung des optimierten Routens nicht unnötigerweise Signalisierungsnachrichten auszutauschen. Regelmäßig werden neue Dialoge zur Informationsübertragung gestartet, um Änderungen bezüglich der Funktionalität zu berücksichtigen und die Einträge in der Tabelle HTAB und auf den neuesten Stand zu bringen und dynamisch fortzuschreiben.

Ein weiteres Beispiel gemäß Figur 2 zeigt den Informationsfluß für ein Leistungsmerkmal zur Unterstützung eines netzbetreiberspezifischen Dienstes, das aus "The CAMEL feature, proposed revisions to the stage 1 description", von ETSI/STC/SMG1, 14.03.1995, GSM-Empfehlung 02.78, Version 0.4.0, Seiten 1-19 bekannt ist. Beim Aktualisieren der Aufenthaltsregistrierung (location update) wird von einem neuen Besucherregister VLR eine Aktualisierungsnachricht mit Angabe seiner Identität und der des Mobilfunkteilnehmers zum Heimatregister HLR gesendet. Das Heimatregister HLR sendet daraufhin eine Nachricht ISD (insert subscriber data) zum Besucherregister VLR, in der Informationen CSI (CAMEL subscription information), beispielsweise die Daten des von ihr unterstützten Leistungsmerkmals, enthalten sind (1). Das Besucherregister VLR überprüft, ob das Leistungsmerkmal auch von ihm unterstützt wird (2), und quittiert den eröffneten Dialog mit dem Rücksenden der Nachricht ISDR (insert subscriber data result) (3). Bei Nichtunterstützung ist in der Nachricht ISDR aufgrund eines negativen Prüfungsergebnisses eine Information CNS (CAMEL not supported) enthalten. Die Tabelle HTAB erhält einen weiteren Eintrag für die Informationen CSI dadurch, daß entweder die binäre 0 bei negativ verlaufenem Dialog oder die binäre 1 bei positiv verlaufenem Dialog für das Besucherregister VLR eingeschrieben wird (4).

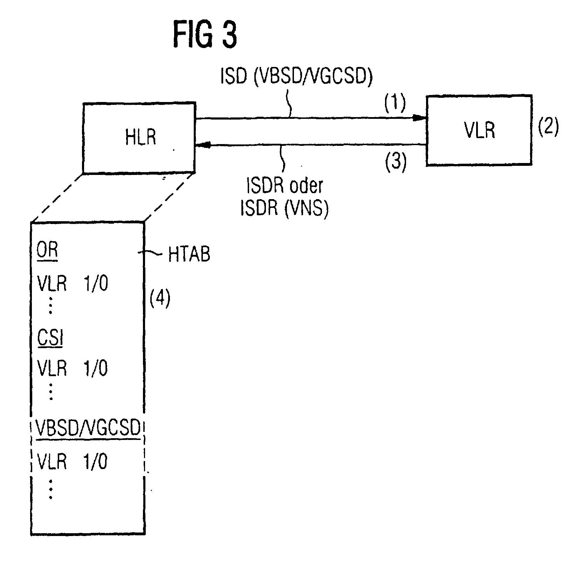

Ein weiteres Beispiel gemäß Figur 3 zeigt den Informationsfluß für Gruppenanrufe betreffende Dienste, die beispielsweise aus den GSM-Empfehlungen 03.68 und 03.69, Versionen 4.0.0, von Januar 1995 bekannt sind. Bei den beschriebenen Gruppenanrufdiensten (VGCS, Voice Group Call Service und VBS, Voice Broadcast Service) wird jeweils ein Gruppenanruf an eine Gruppe von Funkteilnehmern gerichtet, für die der entsprechende Dienst vorgesehen ist. Dabei befinden sich die Teilnehmer der Gruppe in einem - in der Regel aus mehreren Funkzellen bestehenden - Gruppenanruf-Versorgungsbereich (Service Area), der von einer Mobilvermittlungsstelle des Mobilfunknetzes betreut wird. Jeder Gruppenanruf ist an einer speziellen Teilnehmerrufnummer erkennbar, die zumindestens eine Versorgungsbereichsinformation (service area identity) zur Kennzeichnung des Gruppenanruf-Versorgungsbereichs und eine Gruppeninformation (group identity) zur Kennzeichnung der vom Gruppenanruf betroffenen Gruppe von Teilnehmern aufweist. Wie bereits oben beschrieben, wird beim Aktualisieren der Aufenthaltsregistrierung (location update) von einem neuen Besucherregister VLR eine Aktualisierungsnachricht mit Angabe seiner Identität und der des Mobilfunkteilnehmers zum Heimatregister HLR gesendet. Das Heimatregister HLR sendet im vorliegenden Beispiel ebenfalls die Nachricht ISD (insert subscriber data) zum Besucherregister VLR, in der im Gegensatz zu Figur 2 aber andere Informationen VBSD bzw. VGCSD, beispielsweise die Daten des von ihr unterstützten Gruppenanrufdienstes, enthalten sind (1). Das Besucherregister VLR überprüft, ob der jeweilige Gruppenanrufdienst auch von ihm unterstützt wird (2), und quittiert den eröffneten Dialog mit dem Rücksenden der Nachricht ISDR (insert subscriber data result) (3). Bei Nichtunterstützung ist in der Nachricht ISDR aufgrund eines negativen Prüfungsergebnisses eine Information VNS (VBS/VGCS not supported) enthalten. Die Tabelle HTAB erhält einen weiteren Eintrag für die Informationen VBSD bzw. VBS dadurch, daß entweder die binäre 0 bei negativ verlaufenem Dialog oder die binäre 1 bei positiv verlaufenem Dialog für das Besucherregister VLR eingeschrieben wird (4).

Allen Beispielen ist gemeinsam, daß bei jedem Dialog mit einer anderen Netzeinrichtung zunächst die Tabelle der anfragenden Netzeinrichtung abgefragt wird, ob bereits ein Eintrag in der Tabelle für diese andere Netzeinrichtung besteht, und der Dialog nur bei einem positiven Eintrag eröffnet wird. Ansonsten wird beispielsweise ein Ersatzdienst, der aus Kenntnis der Tabelle von der Partner-Netzeinrichtung unterstützt wird, durchgeführt. In den beschriebenen Beispielen spiegelt das Besucherregister VLR zumindestens nicht unterstützte Funktionen, die sich auf Dienste (Optimiertes Routen), Zusatzdienste (Gruppenanrufdienste) und/oder Leistungsmerkmale (CAMEL) beziehen, an das Heimatregister HLR zurück. Wird vom Besucherregister VLR keine negative Rückmeldung empfangen und ist der Dialog damit erfolgreich verlaufen, nimmt das Heimatregister HLR auch ohne gesonderte Information an, daß eine Unterstützung der jeweiligen Funktionen durch das Besucherregister VLR gegeben ist. Alternativ dazu ist auch die Übertragung einer Information zur Signalisierung der Unterstützung der Funktionen möglich.

## Patentansprüche

1. Verfahren zur Übertragung von Informationen zwischen Netzeinrichtungen (z.B. HLR, VLR) eines oder mehrerer Kommunikationsnetze, bei dem
- von einer Netzeinrichtung (HLR) ein Dialog durch Aussenden einer Nachricht (PRN, ISD) zu einer anderen Netzeinrichtung (VLR) eröffnet und von der anderen Netzeinrichtung (VLR) durch Rücksenden einer Antwortnachricht (PSIR, ISDR) quittiert wird,
- anhand der ausgesandten Nachricht (PRN, ISD) jeweils von der Netzeinrichtung (HLR) unterstützte Funktionen der anderen Netzeinrichtung (VLR) mitgeteilt und von der anderen Netzeinrichtung (VLR) auf Unterstützung überprüft werden und ein Prüfungsergebnis in der rückgesandten Nachricht (PRNR, ISDR) der Netzeinrichtung (HLR) mitgeteilt wird, und bei dem
- von der Netzeinrichtung (HLR), die den Dialog initiert hat, eine Tabelle (HTAB) aufgebaut wird, in der für den Fall eines positiven Prüfungsergebnisses ein positiver Eintrag zur Kennzeichnung der Unterstützung der Funktionen durch die andere Netzeinrichtung (VLR) oder für den Fall eines negativen Prüfungsergebnisses ein negativer Eintrag zur Kennzeichnung der Nichtunterstützung der Funktionen durch die andere Netzeinrichtung (VLR) gebildet wird.

2. Verfahren nach Anspruch 1,
**dadurch gekennzeichnet,**
**daß** für nächstfolgende Dialoge von der Netzeinrichtung (HLR), die den Dialog jeweils initiieren möchte, die Tabelle (HTAB) zunächst auf das Vorhandensein eines Eintrags für die andere Netzeinrichtung (VLR) abgefragt und bei einem positiven Eintrag der Dialog eröffnet wird.

3. Verfahren nach Anspruch 1,
**dadurch gekennzeichnet,**
**daß** für nächstfolgende Dialoge von der Netzeinrichtung (HLR), die den Dialog jeweils initiieren möchte, die Tabelle (HTAB) zunächst auf das Vorhandensein eines Eintrags für die andere Netzeinrichtung (VLR) abgefragt und bei einem negativen Eintrag der Dialog entweder nicht eröffnet oder mit Ersatzinformationen in der auszusendenden Nachricht gestartet wird.

4. Verfahren nach einem der vorhergehenden Ansprüche,
**dadurch gekennzeichnet,**
**daß** in regelmäßigen Abständen eine Überprüfung der Unterstützung der Funktionen durch die Netzeinrichtungen (z.B. HLR) initiiert und die Einträge in der Tabelle (HTAB) abhängig vom Prüfungsergebnis aktualisiert werden.

5. Verfahren nach einem der vorhergehenden Ansprüche,
**dadurch gekennzeichnet,**
**daß** die Funktionen neue und/oder bestehende Telekommunikationsdienste, Zusatzdienste und/oder Leistungsmerkmale betreffen, die jeweils im Kommunikationsnetz zur Verfügung zu stellen sind.

6. Verfahren nach Anspruch 5,
**dadurch gekennzeichnet,**
**daß** die Funktionen die Prozeduren zur Durchführung der Telekommunikationsdienste, Zusatzdienste und/oder Leistungsmerkmale im Kommunikationsnetz betreffen.

7. Verfahren nach einem der vorhergehenden Ansprüche,
**dadurch gekennzeichnet,**
**daß** die Netzeinrichtungen (HLR, VLR) zur Informationsübertragung zu einem länderübergreifenden Mobilfunknetz gehören und sich in verschiedenen Landesnetzen befinden.

8. Kommunikationsnetz zur Übertragung von Informationen zwischen Netzeinrichtungen (z.B. HLR, VLR), bei dem
- eine Netzeinrichtung (HLR) Mittel zum Eröffnen eines Dialogs durch Aussenden einer Nachricht (PRN, ISD) zu einer anderen Netzeinrichtung (VLR) aufweist und die andere Netzeinrichtung (VLR) Mittel zum Quittieren des Dialogs durch Rücksenden einer Antwortnachricht (PRNR, ISDR) aufweist,
- die ausgesandte Nachricht (PRN, ISD) eine Mitteilung über jeweils von der Netzeinrichtung (HLR) unterstützte Funktionen enthält, die von der anderen Netzeinrichtung (VLR) auf Unterstützung überprüfbar sind, und die rückgesandte Nachricht (PRNR, ISDR) ein Prüfungsergebnis enthält, und bei dem
- die Netzeinrichtung (HLR), die den Dialog initiiert hat, eine Tabelle (HTAB) aufweist, in der für den Fall eines positiven Prüfungsergebnisses ein positiver Eintrag zur Kennzeichnung der Unterstützung der Funktionen durch die andere Netzeinrichtung (VLR) oder für den Fall eines negativen Prüfungsergebnisses ein negativer Eintrag zur Kennzeichnung der Nichtunterstützung der Funktionen durch die andere Netzeinrichtung (VLR) speicherbar ist.

## Claims

1. Method for transmitting information between network devices (for example HLR, VLR) in one or more communications networks, in which
- a network device (HLR) opens a dialogue by transmitting a message (PRN,ISD) to another network device (VLR), and the other network device (VLR) acknowledges this by sending back a response message (PSIR, ISDR),
- functions which are supported by the network device (HLR) are in each case signalled to the other network device (VLR) using the transmitted message (PRN, ISD), and the other network device (VLR) checks for support, and a check result is signalled in the message (PRNR, ISDR) which is sent back to the network device (HLR), and in which
- the network device (HLR) which initiated the dialogue sets up a table (HTAB) in which, if the check result is positive, a positive entry is made in order to identify support of the functions by the other network device (VLR), or if the check result is negative, a negative entry is made in order to identify that the functions are not supported by the other network device (VLR).

2. Method according to Claim 1,
**characterized in that**,
for subsequent dialogues by the network device (HLR) which in each case wished to initiate the dialogue, the table (HTAB) is first of all checked for the presence of an entry for the other network device (VLR) and, if a positive entry is found, the dialogue is opened.

3. Method according to Claim 1,
**characterized in that**,
for subsequent dialogues by the network device (HLR) which in each case wished to initiate the dialogue, the table (HTAB) is first of all checked for the presence of an entry for the other network device (VLR) and, if there is a negative entry, the dialogue is either not opened, or is started with substitute information in the message to be transmitted.

4. Method according to one of the preceding claims,
**characterized in that**
a check for support of the functions by the network devices (for example HLR) is initiated at regular intervals, and the entries in the table (HTAB) are updated as a result of the check result.

5. Method according to one of the preceding claims,
**characterized in that**
the functions relate to new and/or existing telecommunications services, additional services and/or service features, which are in each case available in the communications network.

6. Method according to Claim 5,
**characterized in that**
the functions relate to the procedures for carrying out the telecommunications services, additional services and/or service features in the communications network.

7. Method according to one of the preceding claims,
**characterized in that**
the network devices (HLR,VLR) are used for information transmission for an international mobile radio network, and are located in different national networks.

8. Communications network for transmitting information between network devices (for example, HLR, VLR), in which
- a network device (HLR) has means for opening a dialogue by transmitting a message (PRN,ISD) to another network device (VLR), and the other network device (VLR) has means for acknowledging the dialogue by sending back a response message (PRNR,ISDR),
- the transmitted message (PRN, ISD) in each case contains a report about functions which are supported by the network device (HLR), and which are checked for support by the other network device (VLR), and the message (PRNR,ISDR) which is sent back contains a check result, and in which
- the network device (HLR) which initiated the dialogue has a table (HTAB) in which, if the check result is positive, a positive entry is saved in order to identify support of the functions by the other network device (VLR), or if the check result is negative, a negative entry is made in order to identify that the functions are not supported by the other network device (VLR).

## Revendications

1. Procédé de transmission d'informations entre des installations de réseau (par exemple HLR, VLR) d'un ou plusieurs réseaux de communication, dans lequel :
- un dialogue est ouvert par envoi d'un message (PRN, ISD) par une installation de réseau (HLR) vers une autre installation de réseau (VLR) et est interrompu par l'autre installation de réseau (VLR) par renvoi d'un message de réponse (PSIR, ISDR),
- à l'aide du message (PRN, ISD) envoyé, des fonctions soutenues par l'installation de réseau (HLR) sont communiquées à l'autre installation de réseau (VLR) et leur soutien est vérifié par l'autre installation de réseau (VLR), et un résultat de vérification est communiqué dans le message renvoyé (PRNR, ISDR) à l'installation de réseau (HLR), et dans lequel :
- l'installation de réseau (HLR) qui a initié le dialogue forme un tableau (HTAB) dans lequel une entrée positive de caractérisation du soutien des fonctions par l'autre installation de réseau (VLR) est formée au cas où le résultat de la vérification est positif et dans lequel une entrée négative de caractérisation du soutien des fonctions par l'autre installation de réseau (VLR) est formée au cas où le résultat de la vérification est négatif.

2. Procédé selon la revendication 1, **caractérisé en ce que** pour le dialogue initié ultérieurement par l'installation de réseau (HR) qui souhaite chaque fois initier le dialogue, le tableau (HTAB) est d'abord interrogé sur la présence d'une entrée pour l'autre installation de réseau (VLR), le dialogue étant ouvert en cas d'entrée positive.

3. Procédé selon la revendication 1, **caractérisé en ce que** pour le dialogue initié ultérieurement par l'installation de réseau (HR) qui souhaite chaque fois initier le dialogue, le tableau (HTAB) est d'abord interrogé sur la présence d'une entrée pour l'autre installation de réseau (VLR), et en cas d'entrée négative, soit le dialogue n'est pas ouvert, soit il est lancé avec des informations de remplacement présentes dans le message à envoyer.

4. Procédé selon l'une des revendications précédentes, **caractérisé en ce qu'**une vérification du soutien des fonctions est initiée par les installations de réseau (par exemple HLR), les entrées dans le tableau (HTAB) étant mises à jour en fonction du résultat de la vérification.

5. Procédé selon l'une des revendications précédentes, **caractérisé en ce que** les fonctions concernent des services de télécommunication et des services supplémentaires nouveaux ou existants et/ou des caractéristiques de prestations nouvelles ou existantes qui doivent chaque fois être proposés sur le réseau de télécommunication.

6. Procédé selon la revendication 5, **caractérisé en ce que** les fonctions concernent des procédures d'exécution des services de télécommunication, des services supplémentaires et/ou des caractéristiques de prestations du réseau de télécommunication.

7. Procédé selon l'une des revendications précédentes, **caractérisé en ce que** les installations de réseau (HLR, VLR) de transmission d'informations appartiennent à un réseau radio mobile couvrant plusieurs pays et sont situées dans différents réseaux nationaux.

8. Réseau de communication pour la transmission d'informations entre des installations de réseau (par exemple HLR, VLR), dans lequel :
- une installation de réseau (HLR) présente des moyens pour ouvrir un dialogue par envoi d'un message (PRN, ISD) à une autre installation de réseau (VLR), l'autre installation de réseau (VLR) présentant des moyens pour interrompre le dialogue par envoi d'un message de réponse (PRNR, ISDR),
- le message (HLR) envoyé contient un message concernant chaque fois des fonctions soutenues par l'installation de réseau (HLR) et dont le soutien peut être vérifié par l'autre installation de réseau (VLR), le message (PRNR, ISDR) renvoyé contenant un résultat de la vérification, et dans lequel :
- l'installation de réseau (HLR) qui a initié le dialogue forme un tableau (HTAB) dans lequel une entrée positive de caractérisation du soutien des fonctions par l'autre installation de réseau (VLR) est formée au cas où le résultat de la vérification est positif et dans lequel une entrée négative de caractérisation du soutien des fonctions par l'autre installation de réseau (VLR) est formée au cas où le résultat de la vérification est négatif.
